# EUROPEAN PATENT SPECIFICATION

(11) **EP 3 571 066 B1**
(45) Date of publication and mention of the grant of the patent: **09.03.2022**
(21) Application number: 18711215.6
(22) Date of filing: 17.01.2018
(51) Int. Cl.: B60D 1/54, B60D 1/62

(54) **AUTOMATIC HINGED TOWING DEVICE ESPECIALLY FOR PASSENGER CARS**
AUTOMATISCHE SCHWENKBARE ABSCHLEPPVORRICHTUNG, INSBESONDERE FÜR PERSONENKRAFTWAGEN
DISPOSITIF DE REMORQUAGE À ARTICULATION AUTOMATIQUE, EN PARTICULIER POUR VOITURES PARTICULIÈRES

(30) Priority: 20.01.2017 CZ 20170024
(43) Date of publication of application: 27.11.2019
(73) Proprietor: Vapos Spol. S.r.o., 506 01 Jicin (CZ)
(72) Inventor: BERNARD, Josef, 506 01 Jicín (CZ)
(74) Representative: Jeck, Anton
(86) International application number: PCT/CZ2018/000003
(87) International publication number: WO 2018/133888

(56) References cited:
- EP-A1- 3 098 097
- US-A1- 2013 093 162

## Description

The invention primarily relates to passenger cars, specifically a hinged towing device.

Three types of towing devices are currently being used. Towing devices with a hook that is firmly attached to the body supporting elements, with a towing device removable hook, and hinged towing device. The hinged towing devices are controlled either mechanically, by means of a cable or electrically powered actuator. In the case of hinged devices with actuators, multi-actuator designs are known, the basis of which rests in the use of a rigid connection between the cam and rotary shaft. These hinged towing device designs are heavy and have a complex structure.

The hinged towing devices use their multiple locking elements to lock their towing arm. The disadvantage of these solutions is the fact that their manufacturing precision cannot guarantee geometric concentricity of the interlocking components. These deficiencies are solved through, for example, additional compensating elements, which make these solutions more expensive.

From the document US 2013/093162 A1 a trailer coupling is known comprising a mounting unit which is fixedly connectable to a vehicle body; a pivot bearing unit, provided on the mounting unit, having a pivot bearing base which is fixedly connected to the mounting unit, and having a pivot element which is pivotable about a pivot axis, relative to the pivot bearing base, between a working position and a rest position, and is displaceable in the direction of the pivot axis between a fixed position and a pivot position; a ball neck which at one end is mounted on the pivot element and which at the other end carries a coupling ball, and which, due to the pivotability of the pivot element, is pivotable about the pivot axis between the working position and the rest position, and due to the displaceability of the pivot element is displaceable between the fixed position and the pivot position; a fixing unit which, in the fixed position of the pivot element, fixes the pivot element, and thus also the ball neck, relative to the pivot bearing base in a rotationally fixed manner by means of positive-fit elements, and in the pivot position allows pivoting; and a locking unit, which acts axially against a displacement in the direction of the pivot axis, by means of which, in the fixed position, the fixing unit is fixable against a movement in the direction of the pivot position, the fixing unit having a stationary first toothed segment which is fixedly connected to the pivot bearing base, by means of which a first toothed segment which in the working position is connected to the pivot element in a rotationally fixed manner and pivots together with same, is engageable by displacing the pivot element from the pivot position into the fixed position, and is disengageable by displacing the pivot element from the fixed position into the pivot position.

The aforementioned deficiencies are to a large extent resolved by the arrangement per this invention when the hinged towing device is designed in such a way that the locking mechanism functions and the hinged arm is tilted automatically through only one actuator and without the use of any rigid connection between the cam and rotary shaft when the cam unlocks the locking; mechanism while turning the rotary shaft to its upright or folded position.

The main components of the hinged towing device include its rotary shaft. One end of it features a forced-on towing arm, and the other one features a ball. In the middle part of the rotary shaft, there is a bearing diameter for a needle bearing mounting. This diameter is coupled with the rotary shaft mount formed by an axial bearing. The axial forces are absorbed from one side by the outer ring of the needle bearing, and on the other side by the locking lid. The outer ring of the needle bearing and locking lid are firmly connected to the towing device beam flange. The part of the rotary shaft behind the mount is drilled. The holes are perpendicular to the axis of rotation, forming a guide for the balls that move simultaneously with the rotary shaft. In the folded or raised position, one of the balls always controls the end switch. When the mechanism is unlocked, the balls reach the small diameter of the expansion spindle and immerse into the rotary shaft guiding diameter, at the other end of which an extension is formed which, when the cam rotates, only touches the cam carrier, and the shaft rotates together with the cam into the raised or folded position. A hole is created in the longitudinal axis of the rotary shaft. It serves as a guide for the expansion part of the spindle and for the main and backup springs. The spindle moves in the axis of rotation and rotates with the rotary shaft. The spindle is still pressed in one direction by the springs; in the other direction it is controlled (shifted) by the axial cam connected to the actuator via a torque clutch.

The expansion spindle features its guiding, conical, safety, small diameter, fatigue relief, and push-off sections. The cam, together with the torque clutch, is mounted in a radial bearing and then in a plastic housing to which the actuator is screwed. The cam actuator features a rotary axis parallel to the rotary shaft axis but shifted by the cam span diameter radius. The tilting mechanism, including the actuator and end switches protected by covers, is sealed with a gasket and several "O" rings.

Thanks to this design, the following functions of the hinged towing device are achieved:
The actuator rotates the cam to the left (folded) or to the right (raised). The cam actuates the expansion spindle, which shifts, and the mechanism gets unlocked. Then, the shaft extension contacts the cam carrier formed on its periphery and the shaft of the appropriate geometric image in the lock cover, the balls fit into the slots of the locking cap and move the resilient contacts so that the end switches are switched off, and the rotation of the actuator, which is secured by the torque clutch against overloading, is stopped. The clutch is set so that the maximum force on the towing arm circumference does not exceed the prescribed force. The corresponding torque of the torque clutch is formed by disc springs that are pre-stressed by a nut." The torque clutch is mounted in the cam and performs the safety function when the towing arm moves. If the towing arm is caught by some obstacle, the actuator is time-limited so that the towing arm movement is interrupted after a set time, and after the obstacle has been removed, the device must be restarted. Another safety feature is the safety lock that ensures complete unlocking of the mechanism by moving the expansion spindle to its position where the balls move from the conical section of the expansion spindle to its cylindrical section, and the expansion spindle with its locking pawl get locked, and the balls touch the expansion spindle cylindrical diameter and get loose in their grooves. In this position, the towing arm features a slight play of the locking mechanism, but the mechanism cannot be fully unlocked when the balls reach the cylindrical section of the expansion spindle. The end switches (sensors or switches) are switched off, and the electronics indicate a fault. The automatic towing device unfolding may be started in multiple ways. One may use the buttons inside a car or on the rear car lid or even remotely, possibly through a radar or ultrasonic sensor or other means. When the electrical plug is plugged into the socket, the electronics shut off the electrical circuit powering the actuator so that the towing arm cannot be raised or folded. This is not possible even while driving.

The technical solution based on this invention will be described in more detail by an embodiment. The figures show as cross-sections:

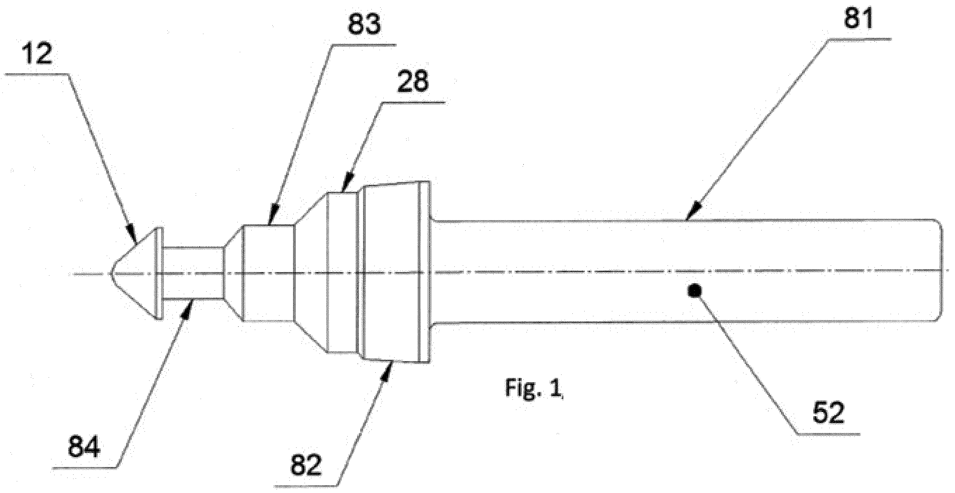

- Fig. 1: the expansion spindle,
- Fig. 2: the cam in its initial position,
- Fig. 3: the cam turned by 180 deg. in its intermediate position,
- Fig. 4: the cam turned to its engaged position,
- Fig. 5: the cam in its end position,

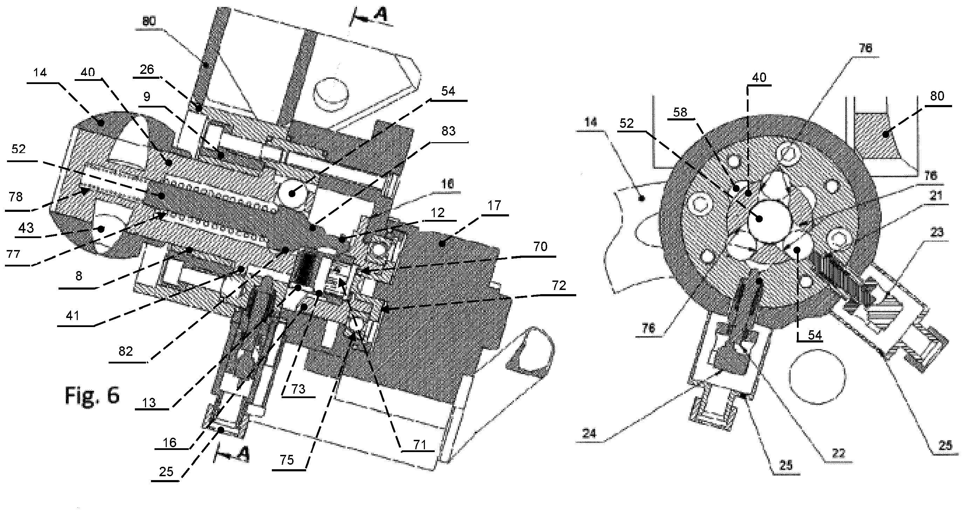

- Fig. 6: a sectional view of the locked device,
- Fig. 7: a sectional view of the unlocked device,
- Fig. 8: a sectional view of the cam and torque clutch,

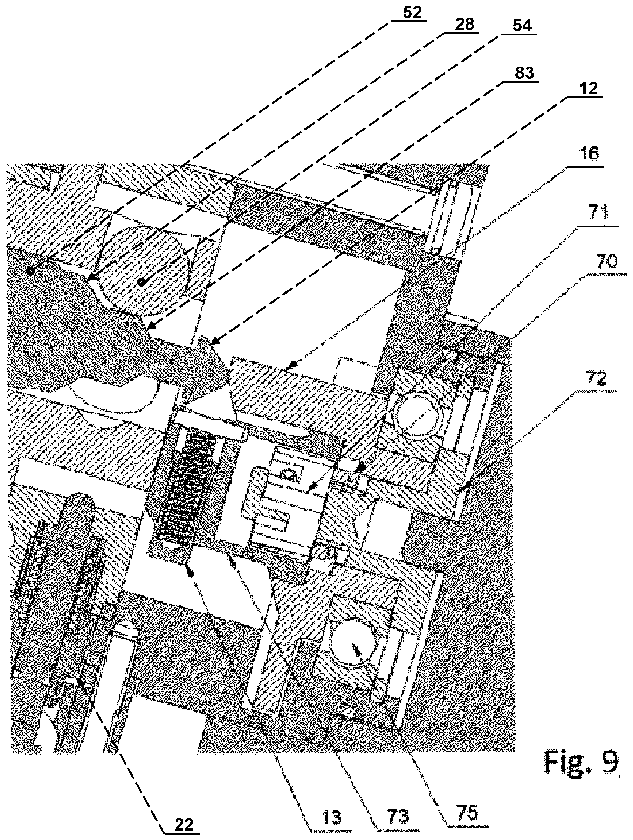

- Fig. 9: a detail cross-section of the cam and torque clutch,
- Fig. 10: a sectional view of the device when the cam is turned by 90°, and the rotary shaft extension may be seen, and
- Fig. 11: shows a cross-section of the device showing the expansion spindle secured against the total mechanism unlocking by a locking device.

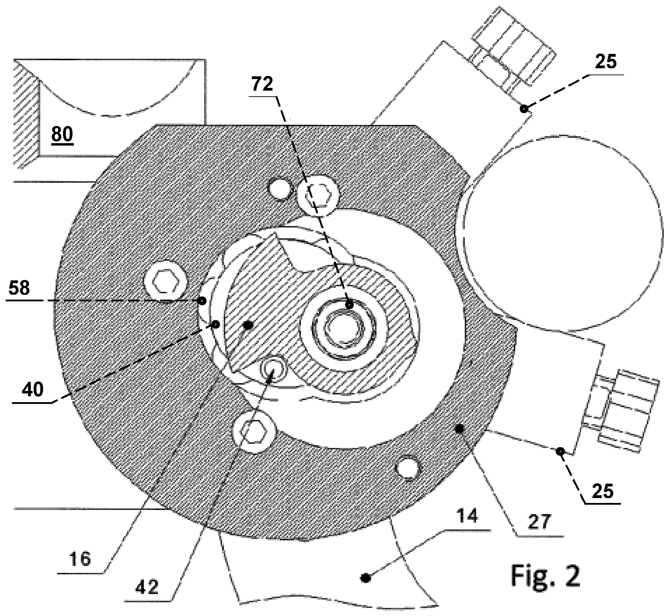

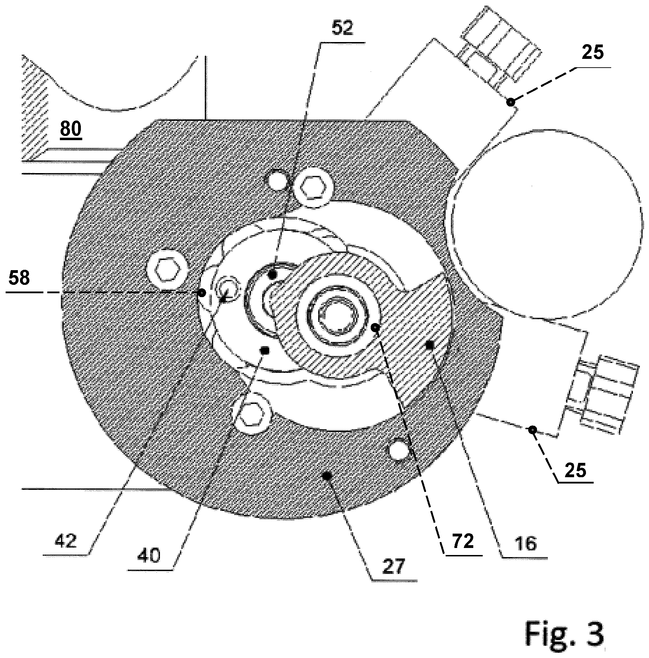

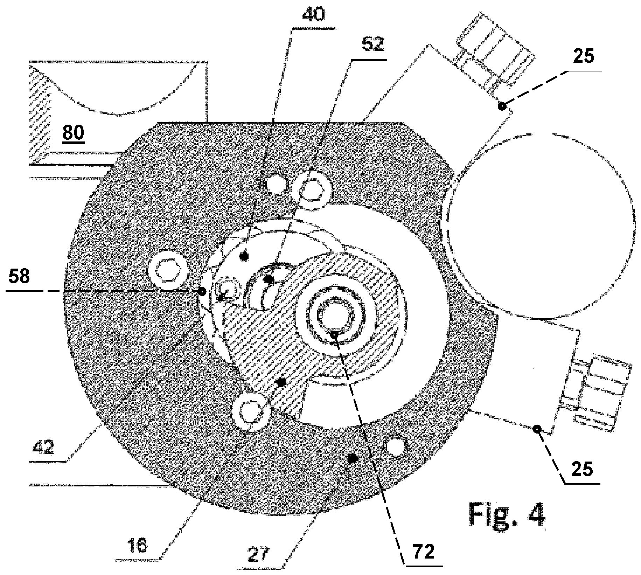

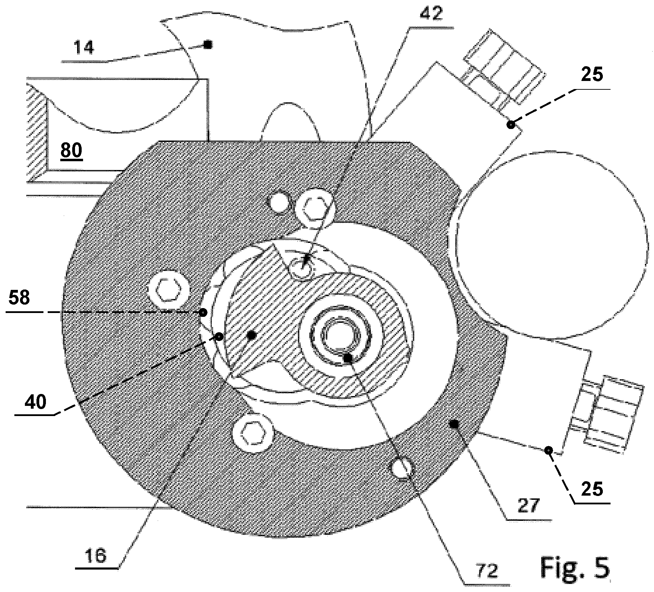

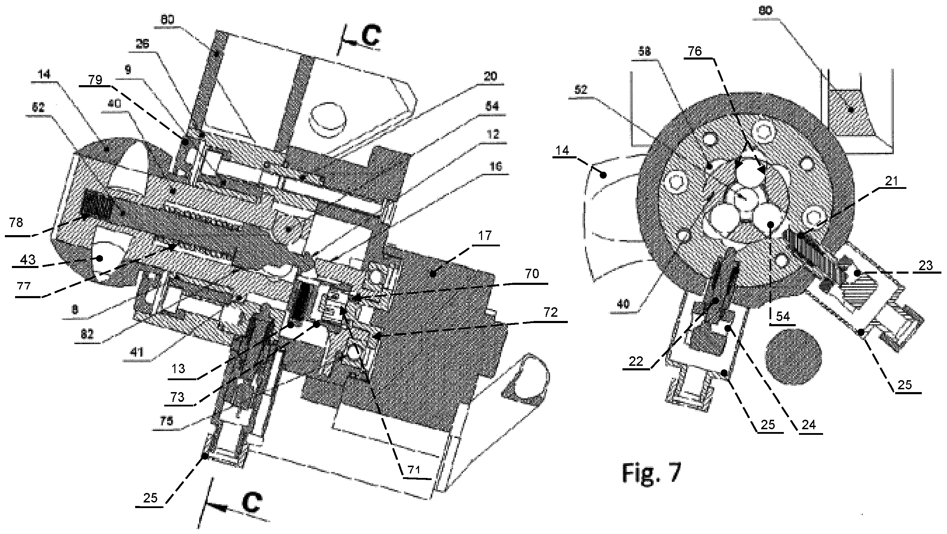

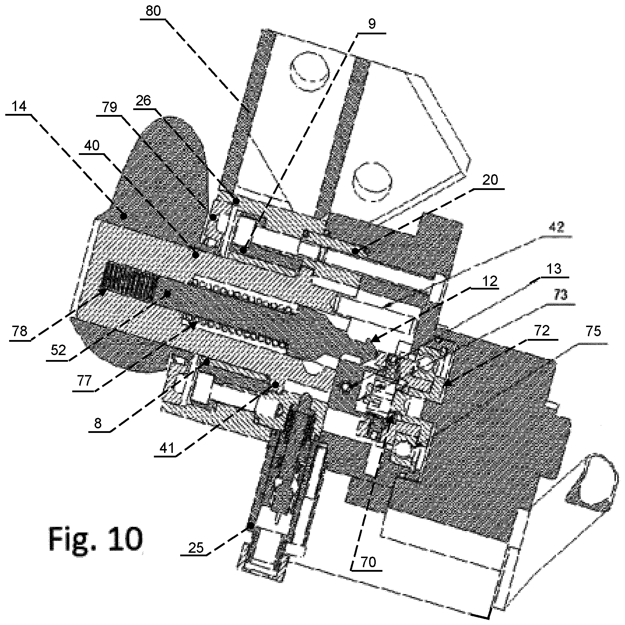

The main components of the hinged mechanism include the pivot shaft (40), one end of which features its forced-on towing arm (14) locked with pins (43). Its other end features the ISO ball (50). In the middle of the pivot shaft (40), there is the needle bearing (8) mounted, behind which is the rotary shaft (40) mount (41) to absorb axial forces. The axial forces are absorbed from one side by the needle bearing (8) outer ring (9) and from the other side by the locking cap (20). The outer ring (9) of the needle bearing (8) and the locking cap (20) are firmly connected to the flange (26) of the towing device beam (80). In the rotary shaft (40) section behind the mount (41), the openings are perpendicular to the rotary shaft (40) axis, forming a guide (76) for the balls (54) that move together with the rotary shaft (40). In the folded or raised position, one of the balls (54) always actuates the end switch (23, 24) in the given geometrical arrangement of the locking cap (20). When the mechanism is unlocked, the balls (54) reach the small diameter (83) of the expansion spindle (52) and move in the guide diameter of the rotary shaft (40) (see Fig. 7) whose other end features the extension (42) (see Fig. 10), which, when the cam carrier (16) is rotated only touches the cam carrier (16), and the shaft (40) turns together with the cam (16) to the raised or folded position (see Figures 2, 3, 4, and 5). A hole is created in the rotary shaft (40) longitudinal axis. The hole acts as a guide for the expansion section of the spindle (52) and for the main spring (77) and backup spring (78). The expansion spindle (52) moves in the rotation axis and turns together with the rotary shaft (40). The spindle (52) is constantly pressed in one direction by two springs (77 and 78), and in the other direction it is controlled (shifted) by the axial cam (16) connected to the actuator (17) via the torque clutch (72).

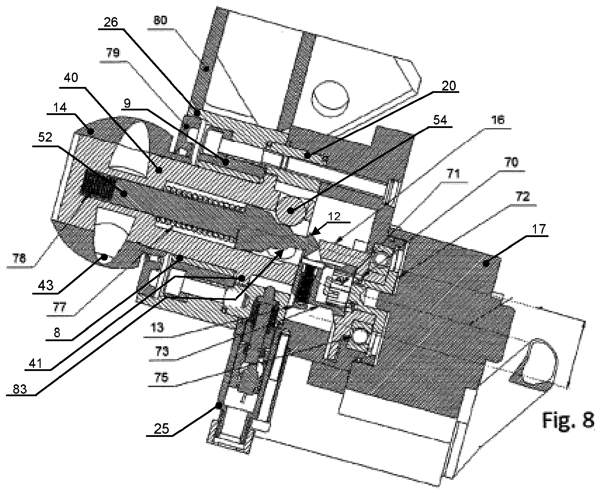

The expansion spindle (52) features its guiding section (81), springs (77 and 78), ball conical section (82) for ball (54) control, safety section (28) that prevents any undesirable ball (54) gripping, small diameter (83) for ball unlocking, relief (84) for the clutch latch (13), and the push-off section (12). The cam (16) together with the torque clutch (72) is mounted in the radial bearing (75) and also in the plastic housing (27) to which the actuator (17) is screwed. The actuator (17) with cam (16) feature their rotational axis parallel to the rotary shaft (40) axis; however, it is displaced by the cam (16) span diameter radius (see Fig. 8). The hinged mechanism, including the actuator (17) and end switches (23 and 24) protected with caps (25), features its IP 67 protection. It is sealed with a gasket (79) and several "O" rings.

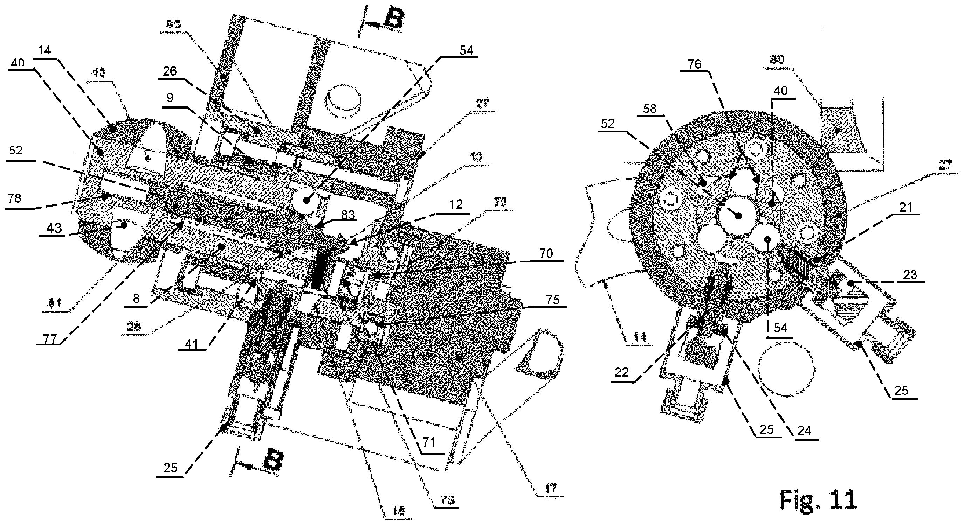

Thanks to this design, the following functions of the hinged towing device are achieved:
The actuator (17) turns to the left (folded) or to the right (raised). It turns the cam (16) and moves the expansion spindle (52). The mechanism becomes fully unlocked (see Fig. 7), while simultaneously engaging the shaft extension (42) with the cam carrier (16) formed on its perimeter. Once the rotary shaft (40) reaches the geometrical arrangement in the locking cap (20), the balls (54) engage in the locking cap (20) grooves (58) and move the resilient contacts (21 and 22) by disabling the limit switches (23 and 24). It stops the rotation of the actuator (17), which is protected by the torque clutch (72) against overload. The clutch (72) is set so that the maximum force on the towing arm (14) circumference does not exceed the prescribed force. The corresponding torque of the torque clutch (72) is formed by disc springs (70) that are pre- stressed by a nut (71). The torque clutch (72) is mounted in the cam (16) and performs the safety function when the towing arm (14) moves. If the towing arm (14) is caught by some obstacle, the actuator (17) is time-limited so that the towing arm (14) movement is interrupted after a set time, and after the obstacle has been removed, the device must be restarted. Another safety feature is the safety lock (73) (see Fig. 11) that ensures complete unlocking of the mechanism by moving the expansion spindle (52) to its position where the balls (54) move from the conical section (82) of the expansion spindle (52) to its cylindrical section (28) (see Fig. 11), and the expansion spindle (52) with its locking pawl (13) gets locked, and the balls (54) touch the expansion spindle cylindrical diameter (28) and get loose in their grooves (58). In this position, the towing arm (14) features a slight play of the locking mechanism, but the mechanism cannot be fully unlocked when the balls (54) reach the cylindrical section (28) of the expansion spindle (52). The end switches (23, 24) (sensors or switches) are switched off, and the electronics indicate a fault. The automatic towing device unfolding may be started in multiple ways. One may use the buttons inside a car or on the rear car lid or even remotely, possibly through a radar or ultrasonic sensor or other means. When the electrical plug is plugged into the socket, the electronics shut off the electrical circuit powering the actuator so that the towing arm (14) cannot be raised or folded. This is not possible even while driving.

This solution is particularly usable in the automotive industry.

## Claims

1. An automatic actuator-controlled (17) hinged towing device comprising a towing arm (14), a needle bearing (8), a mount (41) of the rotary shaft (40), locking cap (20), a towing device beam (80), a towing device beam flange (26), balls (54), at least one end switch (23, 24), a cam (16), an expansion spindle (52), main spring (77) and backup spring (78), an actuator (17), a cam (16) pins (43) and outer ring (9) with
- a rotary shaft (40), to which at one end the towing arm (14) is pressed on, wherein the needle bearing (8) is mounted in the middle section of the rotary shaft (40) , wherein behind the needle bearing (8), there is the mount (41) for the rotary shaft (40), wherein the mount (41) is connected to the outer ring (9) of the needle bearing (8) and on the other side it is connected to the locking cap (20), wherein the outer ring (9) and the locking cap (20) are firmly connected to the towing device beam (80) flange (26), wherein in the bottom section of the rotary shaft (40) behind the mount (41), there are holes perpendicular to the rotary shaft (40) rotation axis, wherein the rotary shaft (40) forms a guide (76) for the balls (54), wherein at least one of the balls (54) is in the respective geometrical arrangement of the locking cap (20) opposite to the at least one end switch (23, 24), wherein on the other end, there is an extension (42), which is connected to the cam (16),
characterized **characterized in**
**that** the towing arm (14) is secured by the pins (43) and in that in the longitudinal axis of the rotary shaft (40), the rotary shaft (40) comprising a hole receiving the expansion spindle (52), the main spring (77) and the backup spring (78), wherein the expansion spindle (52) is actuated in one direction by the springs (77, 78) and in the other direction by the axial cam (16) connected to the actuator (17) stored in the cam (16).

2. The automatic hinged towing device of claim 1 comprising a guiding section (81), a conical section (82), a safety section (28), a small diameter (83) section, a relief (84) section, a protection latch (13) and a push-off section (12) the expansion spindle (52) comprising the guiding section (81) for guiding the springs (77, 78), followed by the conical section (82) to control the balls (54), followed by the safety section (28) that prevents any undesirable ball (54) gripping, followed by the small diameter (83) section for unlocking the balls (54), followed by the relief (84) section for the protection latch (13) and followed by the push-off section (12).

3. The automatic hinged towing device of claim 1 comprising a cam (16) and a circumferential carrier, wherein the cam (16) actuator's (17) rotation axis is parallel to the rotary shaft (40) axis that is shifted by the cam (16) span diameter radius, wherein the cam (16) comprises the circumferential carrier to actuate the rotary shaft (40) extension (42).

4. The automatic hinged towing device of one of the previous claims comprising a torque clutch (72), disc springs (70), a nut (71), wherein the actuator (17) is locked by the torque clutch (72) and disc springs (70) against overloading, wherein the disc springs (70) are pre-stressed by the nut (71) and the torque clutch (72) is housed in the cam (16) to secure safety when the towing arm (14) moves.

## Patentansprüche

1. Automatisch betätigte (17) Gelenkzugvorrichtung mit einem Zugarm (14), einem Nadellager (8), einer Lagerung (41) der Drehwelle (40), einer Verschlusskappe (20), einem Zugvorrichtungsbalken (80), einem Zugvorrichtungsbalkenflansch (26), Kugeln (54), mindestens einem Endschalter (23, 24), einem Nocken (16), einer Spreizspindel (52), Hauptfeder (77) und Stützfeder (78), einem Betätigungselement (17), einem Nocken (16), Bolzen (43) und Außenring (9) mit
- einer Drehwelle (40), auf die an einem Ende der Mitnehmer (14) aufgepresst ist, wobei das Nadellager (8) im mittleren Abschnitt der Drehwelle (40) gelagert ist, wobei sich hinter dem Nadellager (8) die Halterung (41) für die Drehwelle (40) befindet, wobei die Halterung (41) mit dem Außenring (9) des Nadellagers (8) und auf der anderen Seite mit der Verschlusskappe (20) verbunden ist, wobei der Außenring (9) und die Verschlusskappe (20) fest mit dem Zugvorrichtungsbalken (80) verbunden sind (26), wobei im unteren Bereich der Drehwelle (40) hinter der Halterung (41) Löcher senkrecht zur Drehachse der Drehwelle (40) vorhanden sind, wobei die Drehwelle (40) eine Führung (76) für die Kugeln (54) bildet, wobei mindestens eine der Kugeln (54) in der jeweiligen geometrischen Anordnung der Verschlusskappe (20) dem mindestens einen Endschalter (23, 24) gegenüberliegt, wobei am anderen Ende ein Fortsatz (42) vorhanden ist, der mit dem Nocken (16) verbunden ist,
**gekennzeichnet durch**
dass die Deichsel (14) durch die Bolzen (43) gesichert ist und
dass in der Längsachse der Drehwelle (40) die Drehwelle (40) eine Bohrung aufweist, die die Spreizspindel (52), die Hauptfeder (77) und die Stützfeder (78) aufnimmt, wobei die Spreizspindel (52) in einer Richtung durch die Federn (77, 78) und in der anderen Richtung durch den axialen Nocken (16) betätigt wird, der mit dem in dem Nocken (16) gelagerten Betätigungselement (17) verbunden ist.

2. Automatische Gelenkzugvorrichtung nach Anspruch 1
mit einem Führungsabschnitt (81), einem konischen Abschnitt (82), einem Sicherheitsabschnitt (28), einem Abschnitt mit kleinem Durchmesser (83), einem Entlastungsabschnitt (84), einer Schutzklinke (13) und einem Abdrückabschnitt (12), wobei
die Spreizspindel (52) umfasst den Führungsabschnitt (81) zur Führung der Federn (77, 78), gefolgt von dem konischen Abschnitt (82) zur Steuerung der Kugeln (54), gefolgt von dem Sicherheitsabschnitt (28), der ein unerwünschtes Einklemmen der Kugeln (54) verhindert, gefolgt von dem Abschnitt mit kleinem Durchmesser (83) zur Entriegelung der Kugeln (54), gefolgt von dem Entlastungsabschnitt (84) für die Schutzklinke (13) und gefolgt von dem Ausstoßabschnitt (12).

3. Automatische Gelenkzugvorrichtung nach Anspruch 1
mit einer Nocke (16) und einem umlaufenden Träger, wobei die Drehachse (17) des Nockens (16) parallel zur Achse der Drehwelle (40) verläuft, die um den Radius des Spanndurchmessers des Nockens (16) verschoben wird, wobei der Nocken (16) den Umfangsträger zur Betätigung der Verlängerung (42) der Drehwelle (40) aufweist.

4. Automatische Gelenkzugvorrichtung nach einem der vorhergehenden Ansprüche mit einer Drehmomentkupplung (72), Tellerfedern (70), einer Mutter (71), wobei
der Aktuator (17) durch die Drehmomentkupplung (72) und Tellerfedern (70) gegen Überlastung gesichert ist, wobei die Tellerfedern (70) durch die Mutter (71) vorgespannt sind und die Drehmomentkupplung (72) im Nocken (16) untergebracht ist, um die Sicherheit bei der Bewegung des Mitnehmers (14) zu gewährleisten.

## Revendications

1. Dispositif de rame actionné automatiquement (17) avec un bras de traction (14), un roulement à aiguilles (8), un entreposage (41) de l'arbre rotatif (40), un clapet de fermeture (20), une poutre de dispositif de traction (80), une bride de poutre de dispositif de traction (26), des billes (54), au minimum un interrupteur de fin de course (23,24), une came (16), une broche d'écartement (52), un ressort principal (77) et un ressort de support (78), un actionneur (17), une came (16), un boulon (43) et une bague extérieure (9) avec un arbre rotatif (40) qui est serti à l'issue de l'entraîneur (14) où le roulement à aiguilles (8) est disposé au niveau de la partie centrale de l'arbre rotatif (40) où un support (41) pour l'arbre rotatif (40) se trouve derrière le roulement à aiguilles (8) où le support (41) est relié à la bague extérieure (9) du roulement à aiguilles (8) et de l'autre côté au clapet de fermeture (20) où la bague extérieure (9) et le clapet de fermeture (20) sont reliés de façon fixe avec la poutre de dispositif de traction (80) (26) où des trous dans la zone inférieure de l'arbre rotatif (40) sont disponibles derrière le support (41) de façon perpendiculaire à l'axe de rotation de l'arbre rotatif (40) où au minimum l'une des billes (54) est opposée dans l'ensemble géométrique respectif du clapet de fermeture (20) au minimum à l'interrupteur de fin de course (23,24) où un prolongement (42) est disponible à l'autre bout qui est relié à la came (16) est caractérisé de sorte que le timon (14) est assuré par le biais du boulon (43) et que l'arbre rotatif (40) présente un perçage au niveau de l'axe longitudinal de l'arbre rotatif (40) incluant la broche d'écartement (52) ainsi que le ressort principal (77) et le ressort de support (78) où la broche d'écartement (52) est actionnée dans une direction par les biais des ressorts (77,78) et de l'autre direction par le biais de la came axiale (16) qui est reliée à l'élément d'actionnement stocké (17) au niveau de la came.

2. Dispositif automatique de rame selon la revendication 1 avec une section de guidage (81), une section conique (82), une section de sécurité (28), une section présentant un petit diamètre (83), une section de décharge (84), une glissière de protection (13) et une section d'écartement (12) où la broche d'écartement (52) se compose de la section de guidage (81) pour le guidage des supports (77,78) suivie de la section conique pour le contrôle des billes (54), suivie par la section de sécurité (28) obstruant le coincement indésirable des billes (54), suivie par la section présentant un petit diamètre (83) pour le déverrouillage des billes (54), suivie par la section de décharge (84) pour la glissière de protection (13) et suivie par la section d'éjection (12).

3. Dispositif automatique de rame selon la revendication 1 avec un crampon (16) et un support périphérique où l'axe rotatif (17) de la came (16) s'achève parallèlement à l'axe de l'arbre rotatif (40) qui est décalé autour du rayon du diamètre de serrage du crampon (16) où le crampon (16) présente une poutre circonférentielle curviligne pour l'actionnement du prolongement (42) de l'arbre rotatif (40).

4. Dispositif automatique de rame selon l'une des revendications précédentes avec un limiteur de couple (72), un ressort à disques (70), un écrou (71) où l'actionneur (17) est assuré par le limiteur de couple (72) et les ressorts à disques (70) contre une surcharge où les ressorts à disques (70) sont sollicités par l'écrou (71) et le limiteur de couple (72) est placé dans la came (16) en vue de garantir la sécurité lors du mouvement de l'entraîneur (14).
